# FASCICULE DE BREVET EUROPEEN

(11) **EP 1 389 636 B1**
(45) Date de publication et mention de la délivrance du brevet: **02.11.2005**
(21) Numéro de dépôt: 03292015.9
(22) Date de dépôt: 11.08.2003
(51) Int. Cl.: C12G 3/06, A23L 1/22

(54) **Procédé de préparation de boisson alcooliseé anisée contenant de l'anéthole**
Verfahren zur Herstellung eines anetholhaltigen, alkoholischen Getränkes
Method for preparing an alcoholic aniseed beverage containing anethole

(30) Priorité: 14.08.2002 FR 0210342
(43) Date de publication de la demande: 18.02.2004
(73) Titulaire: Pernod-Ricard, 75783 Paris cedex 16 (FR)
(72) Inventeur: Leleu, Martine, 91240 Saint Michel Sur Orge (FR)
(74) Mandataire: Wagret, Frédéric

(56) Documents cités:
- EP-A- 0 139 545
- EP-A- 0 368 736
- FR-A- 2 546 880
- US-A- 4 371 559

## Description

La présente invention concerne un procédé de préparation de boisson alcoolisée anisée contenant de l'anéthole, et plus particulièrement l'utilisation d'un mélange de triglycérides d'acide caprique et caprylique, permettant l'abaissement du point de cristallisation des molécules d'anéthole présentes dans une boisson émulsionnée, alcoolisée et anisée.

Ce procédé vise à permettre la conservation à des températures fraîches d'une boisson alcoolisée contenant de l'anéthole ainsi qu'à la stabiliser au mieux, notamment après congélation.

Les boissons connues contenant de l'anéthole ne sont pas stables à des températures fraîches.

En effet, le point de cristallisation de l'anéthole, une des substances principales des boissons alcoolisées anisées, est de l'ordre de 20-22°C. Ainsi, pour des températures inférieures, l'anéthole se présente sous la forme de cristaux.

Cependant, une solubilisation partielle de l'anéthole est rendue possible par mélange dans une solution contenant de l'éthanol, c'est-à-dire dans une solution homogène, donc ne formant qu'une seule phase, de deux ou plusieurs sortes de molécules.

Une fois qu'un mélange de l'anéthole avec l'éthanol est réalisé, alors le point de cristallisation de l'anéthole diminue.

Certaines boissons sur le marché utilisent cette propriété, ce qui permet la présentation d'un produit limpide et clair, apte à la vente à des températures courantes. Ce sont, en général, des boissons devant être diluées avant consommation (de type « pastis »).

Toutefois, le problème n'est pas entièrement résolu puisque la température de cristallisation de l'anéthole est alors de 7°C.

Malgré tout, cette cristallisation est réversible lors d'une nouvelle élévation de température puisque ce phénomène est réversible pour les solutions.

Ce n'est cependant pas le cas pour les émulsions, c'est-à-dire pour des milieux hétérogènes constitués par la dispersion, à l'état de particules très fines, d'un liquide dans un autre liquide en phase continue.

Ainsi, dans une émulsion, après une cristallisation de l'anéthole due à l'exposition à une température basse, son réchauffement entraîne la formation d'un liquide surnageant d'anéthole non soluble.

Une émulsion ne pourra et ne devra donc pas être stockée dans les mêmes conditions qu'une solution si l'on ne veut pas voir apparaître une cristallisation irréversible.

De ce fait, les émulsions hydroalcoolisées contenant de l'anéthole et dont le titre alcoométrique est inférieur à 15 % vol. ne peuvent être placées dans un réfrigérateur, dont la température est de 4-7°C, sans qu'apparaissent des cristaux qui dénaturent aussi bien le goût que l'aspect extérieur de la boisson.

Ainsi, des boissons anisées, préalablement diluées industriellement, ne pourraient être présentées sous une forme satisfaisante, visuellement et organoleptiquement, puisqu'il y aurait cristallisation de la boisson pour des températures inférieures à 7°C et ainsi dénaturation du goût et de l'aspect.

Dans le but d'éviter et de retarder cette cristallisation, il a été proposé, selon le brevet français 2546880, d'incorporer au moins un triglycéride (par l'ajout d'huiles végétales) dans ces solutions pour ainsi abaisser le point de cristallisation de l'anéthole ou de matières liposolubles présentant une température de cristallisation supérieure à environ 5°C, dans les émulsions qui en contiennent.

Cependant, pour obtenir une boisson stable à 4°C, les doses d'huiles naturelles à incorporer sont telles que la boisson obtenue est altérée au niveau organoleptique. Ces huiles, naturellement riches en triglycérides à chaîne longue, sont de saveur grasse et oxydables.

Les boissons anisées et réglissées sont, en effet, de par leur constitution, très sensibles à toute note aromatique étrangère.

Ainsi, la présente invention se propose de résoudre ce problème de par l'ajout de triglycérides sélectionnés pour leur incidence organoleptique neutre dans l'émulsion et leur caractère stabilisateur de l'émulsion.

Le produit obtenu est particulièrement stable lors de son réchauffement après un stockage au froid positif ou négatif et prise en masse.

Afin d'éviter une cristallisation irréversible de l'anéthole dans une boisson émulsionnée, la présente invention concerne un procédé d'abaissement du point de cristallisation de l'anéthole grâce à la présence de triglycérides à chaîne moyenne.

Plus précisément, afin de ne pas dénaturer le goût de la boisson, les triglycérides à chaîne moyenne incorporés sont les triglycérides d'acide caprylique et d'acide caprique.

De manière privilégiée, la proportion de triglycérides d'acide caprylique incorporée est comprise entre 50 et 70% de la totalité des triglycérides à chaîne moyenne incorporée, et de manière préférentielle 60%.

Avantageusement, la proportion de triglycérides d'acide caprique incorporée est comprise entre 30 et 50% de la totalité des triglycérides à chaîne moyenne incorporée, et de manière préférentielle 40%.

Afin d'éviter l'ajout dans la boisson de molécules indésirables, les triglycérides à chaîne moyenne sont synthétisés à partir du glycérol et des acides caprique et caprylique.

Afin de stabiliser au mieux la boisson émulsionnée, elle peut contenir jusqu'à 150 % en poids, par rapport à l'anéthole, de triglycérides à chaîne moyenne.

La boisson émulsionnée présente comme caractéristique un degré alcoolimétrique volumique compris entre 5 et 20 %, et de manière préférentielle 7.5 %.

De manière à stabiliser avantageusement l'émulsion, notamment face à une congélation, celle-ci contient un agent émulsifiant qui est, par exemple, la gomme arabique.

La boisson émulsionnée peut contenir, par exemple, 350 mg/l d'anéthole pour 7.5 % de volume d'alcool.

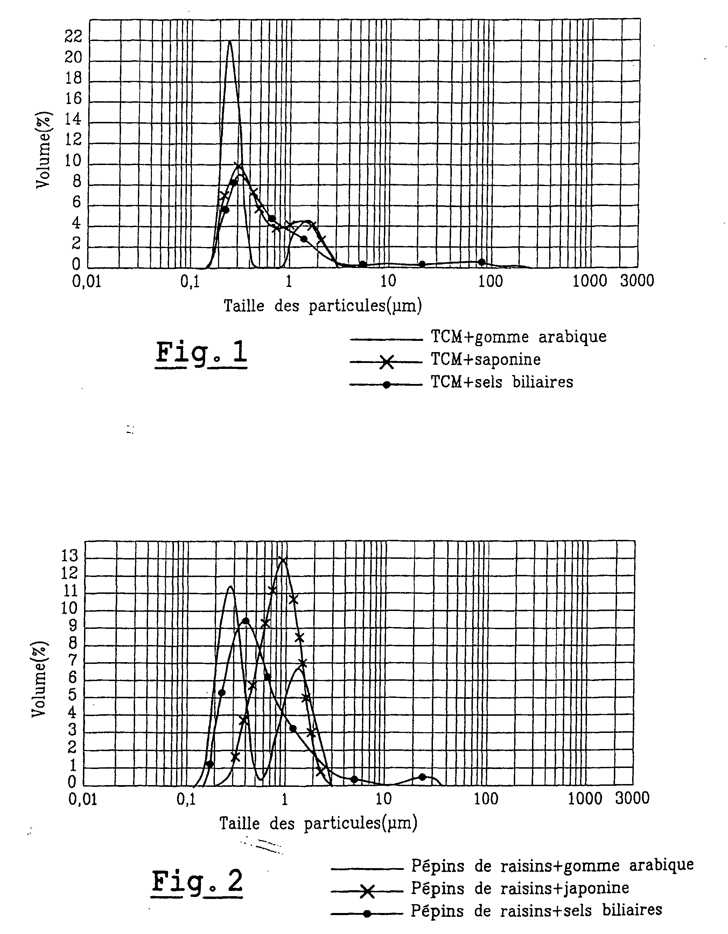

La présente invention sera maintenant comprise à la lumière de la description suivante se rapportant à différents tests effectués en laboratoire ainsi qu'aux figures 1 à 4 représentant la distribution granulométrique des particules de la phase huileuse dispersées dans la phase aqueuse de l'émulsion.
- la Figure 1 représente le graphique de la distribution granulométrique des particules dans une émulsion, avant sa congélation, contenant des triglycérides à chaîne moyenne et un des agents émulsifiants suivants : la gomme arabique, la saponine et les sels biliaires.
- La Figure 2 représente le graphique de la distribution granulométrique des particules dans une émulsion, avant sa congélation, contenant de l'huile de pépins de raisins et un des agents émulsifiants suivants : la gomme arabique, la saponine et les sels biliaires.
- La Figure 3 représente le graphique de la distribution granulométrique des particules dans une émulsion, après sa congélation, contenant des triglycérides à chaîne moyenne et un des agents émulsifiants suivants : la gomme arabique, la saponine et les sels biliaires.
- La Figure 4 représente le graphique de la distribution granulométrique des particules dans une émulsion, après sa congélation, contenant de l'huile de pépins de raisins et un des agents émulsifiants suivants : la gomme arabique, la saponine et les sels biliaires.

Les exemples indiqués ne sont fournis qu'à titre illustratif et ne limitent nullement l'invention.

Les triglycérides à chaîne moyenne (TCM) utilisés peuvent être obtenus, soit à partir d'huiles végétales ayant des teneurs élevées en triglycérides à chaîne moyenne, soit à partir d'une réaction d'estérification de coupes d'acides gras sur du glycérol.

L'anéthole utilisé est pur ou extrait de plantes contenant de l'anéthole.

On procède au mélange de l'anéthole et des TCM, ce qui donne une phase huileuse, qui est par la suite émulsionnée dans une phase aqueuse sous l'action stabilisante d'un tensioactif.

Il peut être avantageusement utilisé jusqu'à 100 % en poids, par rapport à l'anéthole, de triglycérides à chaîne moyenne.

Les proportions utilisées pour les mélange représentés ci-dessous ne sont pas limitatives de l'invention et ne servent qu'à illustrer le propos.

Mélange 1 : 23.5 g d'anéthole + 23.5 g de TCM + 1.5 g de saponine de soja + QSP 1 litre d'eau.

Mélange 2 : 25 g d'anéthole + 25 g de TCM + 1 g de sels biliaires + QSP 1 litre d'eau.

Mélange 3 : 35 g d'anéthole + 35 g de TCM + 200 g de gomme arabique + QSP 1 litre d'eau.

Il est ensuite possible à partir de ces émulsions concentrées de préparer des boissons de 5 à 10 % vol. titrant environ 350 mg/l d'anéthole.

Le choix des TCM s'est porté sur les triglycérides à huit et dix atomes de carbone. Il s'agit des triglycérides d'acide caprylique et d'acide caprique.

Ce mélange de TCM est particulièrement avantageux. Il contient entre 50 et 70 % de triglycérides d'acide caprylique, et de manière préférentielle 60 %, et entre 30 et 50 % de triglycérides d'acide caprique, et de manière préférentielle 40 %.

Ce mélange de TCM, dans ces proportions, a, de manière avantageuse, une incidence neutre au niveau organoleptique sur la boisson émulsionnée.

En effet, des tests organoleptiques ont été effectués à partir de différentes émulsions contenant des triglycérides.

Le choix s'est porté sur de l'huile de pépins de raisins, de l'huile de tournesol et des TCM dans la proportion de 60 % de triglycérides d'acide caprylique, pour 40 % de triglycérides d'acide caprique.

Les huiles de pépins de raisins et de tournesol ont déjà été utilisées selon l'art antérieur pour permettre l'abaissement du point de cristallisation de l'anéthole dans des boissons alcoolisées.

Elles se différencient principalement par rapport au mélange des TCM de la présente invention en ce qu'elles ne contiennent que des triglycérides à chaîne longue et non à chaîne moyenne.

Ainsi, pour une boisson à 7.5 % vol. et contenant 350 mg/l d'anéthole, il a été incorporé : soit 230 mg/l d'huile de pépins de raisins, soit 230 mg/l d'huile de tournesol ou soit 350 mg/l de triglycérides à chaîne moyenne.

Les résultats obtenus correspondent à des temps de vieillissement de l'émulsion.

On a ainsi pu déterminer l'incidence organoleptique de ces deux huiles végétales et de ces TCM au temps initial du mélange, après 15 jours à une température de 37 °C et après 1 mois à 37°C.

Des tests olfactifs ont été parallèlement réalisés.

Les résultats obtenus se trouvent dans les tableaux 1, 2 et 3 :

**Tableau 1 :**

| Caractéristiques Gustatives et olfactives au temps initial T=0 pour trois émulsions : | | | |
|---|---|---|---|
| Emulsion contenant : | Triglycérides à chaîne moyenne | Huile de pépins de raisins | Huile de tournesol |
| Caractéristiques olfactives | Note anisée non altérée | Note anisée non altérée | Manque de fraîcheur de la note anisée |
| Caractéristiques gustatives | Note anisée non altérée | Perception de notes grasses | Perception de notes grasses |

**Tableau 2 :**

| Caractéristiques gustatives et olfactives au temps T=15 jours pour trois émulsions conservées à 37 °C : | | | |
|---|---|---|---|
| Emulsion contenant de : | Triglycérides à chaîne moyenne | Huile de pépins de raisins | Huile de tournesol |
| Caractéristiques olfactives | Note anisée non altérée | Perception de notes grasses | Perception de notes lourdes et grasses |
| Caractéristiques gustatives | Note anisée non altérée | Perception de notes grasses | Perception de notes grasses |

**Tableau 3 :**

| Caractéristiques gustatives et olfactives au temps T=1 mois pour trois émulsions conservées à 37 °C : | | | |
|---|---|---|---|
| Emulsion contenant de : | Triglycérides à chaîne moyenne | Huile de pépins de raisins | Huile de tournesol |
| Caractéristiques olfactives | Note anisée non altérée | Perception de notes rances | Perception de notes lourdes, grasses, oxydées de type rance |
| Caractéristiques gustatives | Note anisée non altérée | Perception de notes grasses et rances | Perception de notes rances |

Ces résultats montrent qu'à l'instant initial les TCM n'altèrent pas la note anisée aussi bien au niveau gustatif qu'au niveau olfactif.

Quant à l'huile de pépins de raisins, elle est certes neutre olfactivement mais entraîne toutefois une perception de notes grasses au niveau gustatif.

L'huile de tournesol n'est pas neutre sur le plan olfactif ni gustatif.

Les TCM supportent également un vieillissement de l'émulsion sans entraîner de dégradation olfactive et gustative.

Les huiles de pépins de raisins et de tournesol ne présentent pas cet avantage.

Ainsi, les TCM sont donc particulièrement avantageux pour permettre une conservation de l'émulsion sans entraîner l'apparition de notes dénaturant le goût et l'odeur de l'émulsion dans lesquels ils sont mélangés.

D'autres tests sur le point de cristallisation de l'anéthole ont été effectués.

Ainsi, on a placé ces trois émulsions à une température de 4°C pour déterminer si elles pouvaient être stockées à des températures proches de celles d'un réfrigérateur.

On a pu constater que l'émulsion contenant de l'huile de pépins de raisins a cristallisé après 4 jours et que celle contenant de l'huile de tournesol a cristallisé après 5 jours à la température de 4°C.

Par contre, l'émulsion contenant les triglycérides à chaîne moyenne n'a pas présenté de cristaux d'éthanol après 90 jours.

L'ajout de triglycérides à chaîne moyenne permet donc d'empêcher de façon remarquable et exceptionnelle la cristallisation de l'anéthole présente dans l'émulsion, par rapport aux émulsions connues de l'art antérieur contenant des huiles végétales riches en triglycérides à chaîne longue.

L'huile de pépins de raisins présente des avantages certains par rapport à l'huile de tournesol, notamment au niveau des perceptions olfactives et gustatives de l'émulsion ; on a réalisé par la suite des tests complémentaires sur la stabilité d'une émulsion contenant des TCM par rapport à une émulsion contenant de l'huile de pépins de raisins.

Une analyse granulométrique permet de déterminer la stabilité d'une émulsion à partir de la mesure des diamètres des particules de la phase huileuse dispersées dans la phase aqueuse.

En effet, l'homogénéité de la taille de ces particules est un des facteurs permettant de juger de la stabilité des émulsions.

Ces analyses ont été réalisées avant et après congélation en utilisant différents agents émulsifiants, c'est-à-dire la gomme arabique, la saponine ou des sels biliaires.

Les résultats de ces analyses sont illustrés sur les figures 1 à 4.

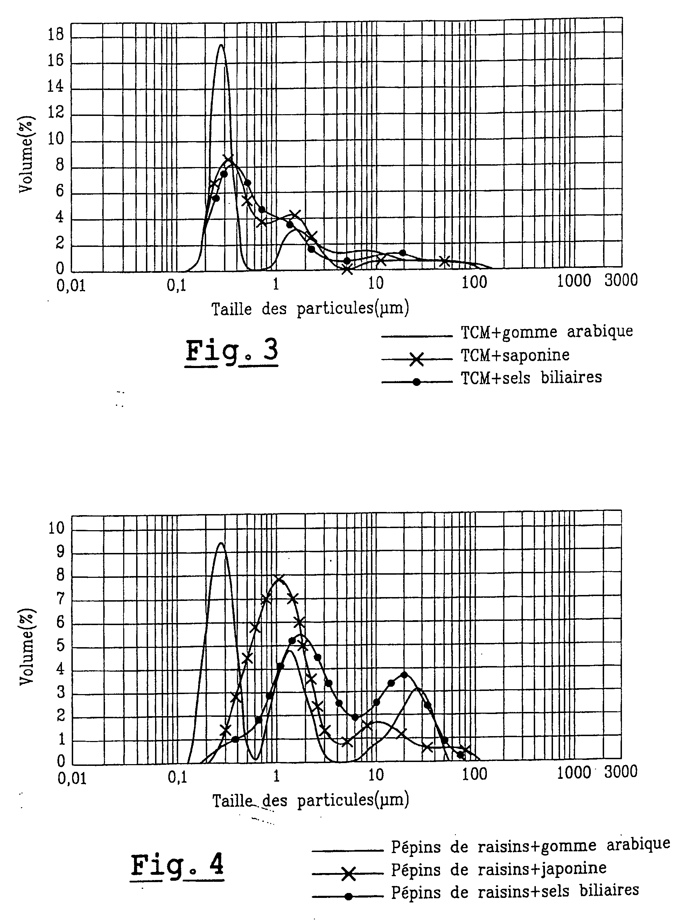

A la lumière des figures 1 et 3, il apparaît que l'émulsion contenant des triglycérides à chaîne moyenne avec de la gomme arabique est particulièrement stable avant et après congélation, puisque les particules sont essentiellement représentées grâce à deux pics d'amplitude importante.

Il est à noter, qu'en regard de la distribution granulométrique de la figure 3, que la congélation de l'émulsion n'a que très peu d'effets, à part en amplitude, sur l'allure du graphique de la distribution granulométrique avant congélation c'est-à-dire sur le graphique de la figure 1.

A partir de la figure 2, on peut remarquer que l'émulsion contenant de la gomme arabique et de l'huile de pépins de raisins est également la plus homogène des trois émulsions analysées, puisque l'ensemble des particules est regroupé sur deux pics, mais que l'amplitude du premier pic n'est que de 11 % en volume alors qu'il est de près de 22 % pour le premier pic de l'analyse granulométrique de l'émulsion de la figure 1 contenant de la gomme arabique et les TCM.

Ainsi, l'émulsion contenant des triglycérides à chaîne moyenne est également plus stable que l'émulsion contenant de l'huile de pépins de raisins, avant congélation.

Cette caractéristique est conservée après congélation, puisque l'on voit même, sur la figure 4, une dispersion de la distribution granulométrique du mélange huile de pépins de raisins et gomme arabique, qui se retrouve représentée à partir de trois pics et non de deux, avant congélation.

Ainsi, le procédé d'abaissement du point de cristallisation de l'anéthole permet également avantageusement de stabiliser l'émulsion avant et après congélation.

Des mesures du potentiel Zêta ont également été réalisées sur ces deux émulsions.

Cette mesure permet de caractériser la charge électrique à la surface de la particule. En effet, plus la charge négative est élevée, plus la particule est stable dans son milieu.

L'émulsion à base gomme arabique présente un potentiel Zeta de -17 mV en présence d'huiles de pépins de raisins et une valeur de -26 mV en présence de triglycérides à chaîne moyenne.

L'émulsion à base gomme arabique est donc plus stable de par l'ajout de triglycérides à chaîne moyenne.

L'émulsion contenant ces triglycérides peut également être congelée jusqu'à des températures de -18°C sans dissociation de cristaux d'anéthole.

## Revendications

1. Procédé d'abaissement du point de cristallisation de l'anéthole dans une boisson émulsionnée, **caractérisé en ce que** l'on réalise une boisson émulsionnée contenant des triglycérides à chaînes moyennes, lesdits triglycérides à chaîne moyenne étant les triglycérides d'acide caprylique et d'acide caprique.

2. Procédé selon la revendication 1, **caractérisé en ce que** la proportion de triglycérides d'acide caprylique incorporée est comprise entre 50 et 70 % de la totalité des triglycérides à chaîne moyenne incorporés, et de manière préférentielle est de 60 %.

3. Procédé selon la revendication 1, **caractérisé en ce que** la proportion de triglycérides d'acide caprique incorporée est comprise entre 30 et 50 % de la totalité des triglycérides à chaîne moyenne incorporés, et de manière préférentielle est de 40 %.

4. Procédé selon l'une des revendications 1 à 3, **caractérisé en ce que** les triglycérides à chaîne moyenne utilisés sont synthétisés à partir de glycérol et des acides gras capriques et capryliques.

5. Procédé selon l'une des revendications précédentes, **caractérisé en ce que** les émulsions peuvent contenir jusqu'à 150% en poids, par rapport à l'anéthole, de triglycérides à chaîne moyenne.

6. Procédé selon l'une des revendications précédentes, **caractérisé en ce que** le degré alcoolimétrique volumique de la boisson émulsionnée est compris entre 5 et 20 %, et de manière préférentielle 7.5 %.

7. Procédé selon l'une des revendications précédentes, **caractérisé en ce que** la boisson contient un agent émulsifiant.

8. Procédé selon la revendication 7, **caractérisé en ce que** l'agent émulsifiant est la gomme arabique.

9. Procédé selon l'une des revendications précédentes, **caractérisé en ce que** la boisson contient 350 mg/l d'anéthole pour 7.5 % de volume d'alcool.

## Patentansprüche

1. Verfahren zum Senken des Kristallisationspunkts des Anethols in einem emulgierten Getränk, **dadurch gekennzeichnet, dass** ein emulgiertes Getränk hergestellt wird, das Triglyceride mit mittleren Ketten enthält, wobei die Triglyceride mit mittlerer Kette die Triglyceride von Caprylsäure und Caprinsäure sind.

2. Verfahren nach Anspruch 1, **dadurch gekennzeichnet, dass** der Anteil der aufgenommenen Caprylsäure-Triglyceride zwischen 50 und 70% der gesamten aufgenommenen Triglyceride mit mittlerer Kette umfasst und vorzugsweise 60% beträgt.

3. Verfahren nach Anspruch 1, **dadurch gekennzeichnet, dass** der Anteil der aufgenommen Caprinsäure-Triglyceride zwischen 30 und 50% der gesamten aufgenommenen Triglyceride mit mittlerer Kette umfasst und vorzugsweise 40% beträgt.

4. Verfahren nach einem der Ansprüche 1 bis 3, **dadurch gekennzeichnet, dass** die verwendeten Triglyceride mit mittlerer Kette aus Glycerin und Caprin- und Capryl-Fettsäuren synthetisiert werden.

5. Verfahren nach einem der vorstehenden Ansprüche, **dadurch gekennzeichnet, dass** die Emulsionen im Verhältnis zum Anethol bis zu 150 Gewichtsprozent Triglyceride mit mittlerer Kette enthalten können.

6. Verfahren nach einem der vorstehenden Ansprüche, **dadurch gekennzeichnet, dass** der Alkohol-Volumen-Gehalt des emulgierten Getränks zwischen 5 und 20% liegt und vorzugsweise 7,5 % beträgt.

7. Verfahren nach einem der vorstehenden Ansprüche, **dadurch gekennzeichnet, dass** das Getränk ein Emulgiermittel enthält.

8. Verfahren nach Anspruch 7, **dadurch gekennzeichnet, dass** das Emulgiermittel Gummi arabicum ist.

9. Verfahren nach einem der vorstehenden Ansprüche, **dadurch gekennzeichnet, dass** das Getränk 350 mg/l Anethol bei 7,5 Volumenprozent Alkohol enthält.

## Claims

1. Process for lowering the crystallization point of anethole in an emulsified beverage, **characterized in that** an emulsified beverage containing medium chain triglycerides is produced, said medium chain triglycerides being the triglycerides of caprylic acid and of capric acid.

2. Process according to Claim 1, **characterized in that** the proportion of triglycerides of caprylic acid incorporated is included between 50 and 70% of the totality of the medium chain triglycerides incorporated, and is preferably 60%.

3. Process according to Claim 1, **characterized in that** the proportion of triglycerides of capric acid incorporated is included between 30 and 50% of the totality of the medium chain triglycerides incorporated, and is preferably 40%.

4. Process according to one of Claims 1 to 3, **characterized in that** the medium chain triglycerides used are synthesized from glycerol and from the capric and caprylic fatty acids.

5. Process according to one of the preceding Claims, **characterized in that** the emulsions may contain up to 150% by weight, with respect to the anethole, of medium chain triglycerides.

6. Process according to one of the preceding Claims, **characterized in that** the alcohol degree by volume of the emulsified beverage is included between 5 and 20%, and preferably 7.5%.

7. Process according to one of the preceding Claims, **characterized in that** the beverage contains an emulsifying agent.

8. Process according to Claim 7, **characterized in that** the emulsifying agent is gum arabic.

9. Process according to one of the preceding Claims, **characterized in that** the beverage contains 350 mg/l of anethole for 7.5% by volume of alcohol.
